# FASCICULE DE BREVET EUROPEEN

(11) **EP 1 059 108 B1**
(45) Date de publication et mention de la délivrance du brevet: **21.02.2007**
(21) Numéro de dépôt: 00401604.4
(22) Date de dépôt: 07.06.2000
(51) Int. Cl.: B01D 46/52, B01D 29/03, B01D 29/33

(54) **Elément filtrant pour moteur à combustion interne**
Filterelement für Brennkraftmaschine
Filter element for internal combustion engine

(30) Priorité: 11.06.1999 FR 9907415
(43) Date de publication de la demande: 13.12.2000
(73) Titulaire: FILTRAUTO, 78180 Montigny le Bretonneux (FR)
(72) Inventeur: Lecluse, Eric Pierre Olivier, 78000 Versailles (FR)
(74) Mandataire: Burbaud, Eric

(56) Documents cités:
- DE-A- 4 126 126
- DE-A- 4 217 195
- DE-A- 4 345 121
- US-A- 3 799 354
- US-A- 5 053 131

## Description

La présente invention est relative aux éléments filtrants pour filtrer un fluide liquide ou gazeux.

Plus particulièrement, de tels éléments filtrants sont destinés à être utilisés dans des véhicules automobiles pour filtrer de l'huile, du gazole ou de l'essence, ou bien encore l'air entrant dans le moteur à combustion interne de tels véhicules.

Parmi les éléments filtrants en question, l'invention concerne plus spécialement ceux qui sont constitués par une feuille souple poreuse plissée pour filtrer un fluide dont le flux se déplace selon un sens déterminé, l'élément filtrant possédant des première et deuxième faces opposées ainsi qu'une succession de plis, les première et deuxième faces étant espacées l'une de l'autre par un écartement correspondant à l'épaisseur de l'élément filtrant et étant respectivement situées en amont et en aval par rapport au déplacement du flux du fluide, chacun des plis comprenant une arête et deux rabats qui définissent ladite épaisseur, les arêtes des plis étant disposées sur la face amont et la face aval.

Dans ce type d'élément filtrant, la majeure partie du flux de fluide est filtrée par les portions des rabats des plis qui sont voisines de la face aval de l'élément. Ceci provoque un encrassement prématuré de la partie aval de l'élément filtrant entraînant la nécessité du remplacement de cet élément alors que la partie amont pourrait encore assurer sa fonction de filtrage de manière satisfaisante.

La présente invention a pour but de remédier aux inconvénients précités en fournissant un élément filtrant dont les plis assurent la fonction de filtrage sur toute leur surface.

A cet effet, selon l'invention, un élément filtrant du genre en question est essentiellement caractérisé en ce qu'au moins un rabat de chaque pli comprend au moins un relief tourné vers le rabat du pli suivant, le relief étant de forme convergente en direction de la face amont de l'élément filtrant et occupant au moins 10% de la surface de la moitié amont du rabat de chaque pli.

Grâce à ces dispositions, la perte de charge au niveau de chaque pli est augmentée dans la partie amont des plis de façon à augmenter la proportion du débit traversant cette même partie et ainsi avoir un débit homogène sur toute la surface de la feuille souple.

Dans des modes de réalisation préférés, on a recours en outre à l'une et/ou à l'autre des dispositions suivantes :
- chaque rabat de chaque pli comprend plusieurs reliefs qui sont décalés les uns par rapport aux autres dans le sens de la largeur et de l'épaisseur de l'élément filtrant ;
- les reliefs de chaque pli sont disposés selon une première et une deuxième rangées, la première rangée étant placée en amont de la deuxième rangée par rapport au sens de déplacement du fluide ;
- la projection des reliefs sur un plan est de forme voisine d'un triangle isocèle dont la pointe est située en amont de la base par rapport au sens de déplacement du fluide ;
- les pointes des reliefs de la deuxième rangée sont situés en amont des bases des reliefs de la première rangée par rapport au sens de déplacement du fluide ;
- les plis sont identiques et les reliefs en regard de deux plis successifs sont mutuellement écartés ;
- les plis sont identiques et les reliefs en regard de deux plis successifs sont en contact ;
- chaque rabat comporte au moins un élément de séparation qui maintient écartés les rabats d'un même pli et qui est tourné à l'opposé dudit au moins un relief ;
- ledit au moins un élément de séparation est aligné avec ledit au moins un relief du même pli selon l'épaisseur de l'élément filtrant ;
- l'élément filtrant est cylindrique présentant une surface externe et une surface interne, l'une étant constituée par la face amont et l'autre par la face aval, les arêtes étant orientées axialement ; et
- l'élément filtrant est un panneau plat de forme rectangulaire.

D'autres caractéristiques et avantages de l'invention apparaîtront au cours de la description détaillée suivante de deux de ses formes de réalisation, données à titre d'exemple non limitatif, en regard des dessins annexés sur lesquels :
- les figures 1 et 2 sont respectivement des vues de dessus et de côté d'une cartouche de filtration panneau et d'une cartouche de filtration cylindrique, qui incorporent chacune un élément filtrant selon la présente invention ;
- la figure 3 est une vue d'ensemble d'un premier mode de réalisation de l'élément filtrant selon la présente invention ;
- la figure 4 est une vue agrandie d'un tronçon d'un pli de l'élément filtrant de la figure 3 ;
- la figure 5 est une vue d'ensemble d'un tronçon d'un pli de l'élément filtrant selon un deuxième mode de réalisation de la présente invention ; et
- la figure 6 est une vue en coupe selon les lignes VI-VI du pli de la figure 5.

Sur les différentes figures, les mêmes références désignent des éléments identiques ou similaires.

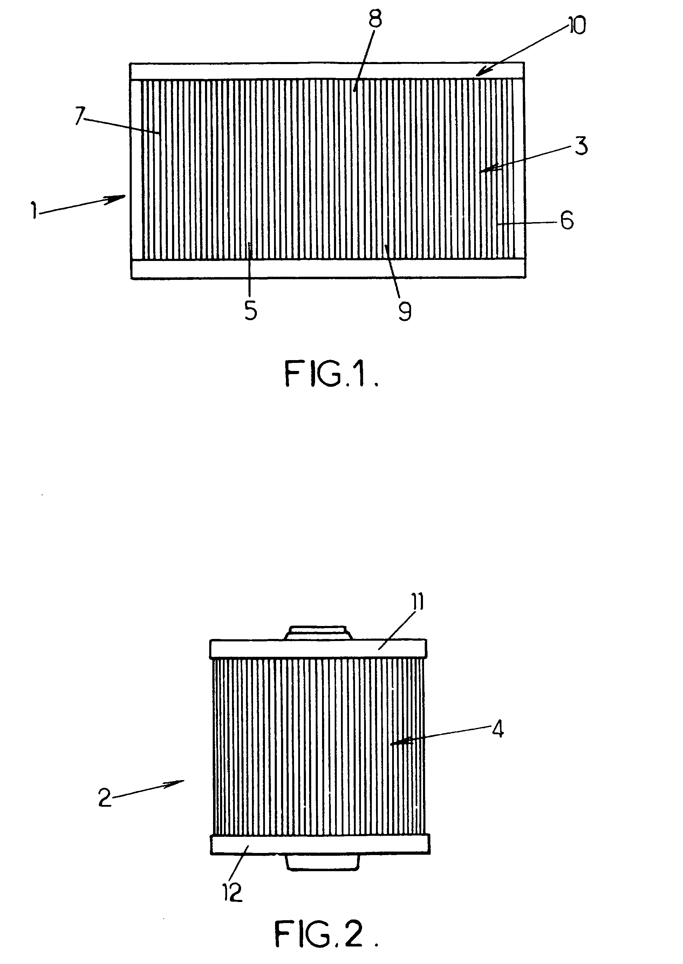

Les figures 1 et 2 représentent deux types de cartouche filtrante qui sont destinés par exemple à filtrer l'huile de lubrification d'un moteur à combustion interne, le carburant liquide ou l'air alimentant un tel moteur, ou encore l'air de l'habitacle.

La cartouche filtrante 1 de la figure 1 est une cartouche du type panneau et la cartouche filtrante 2 de la figure 2 est une cartouche cylindrique. Chacune de ces cartouches incorporent un élément filtrant 3, 4 qui est plat dans le premier type de cartouche et qui est conformé en cylindre dans le deuxième type de cartouche.

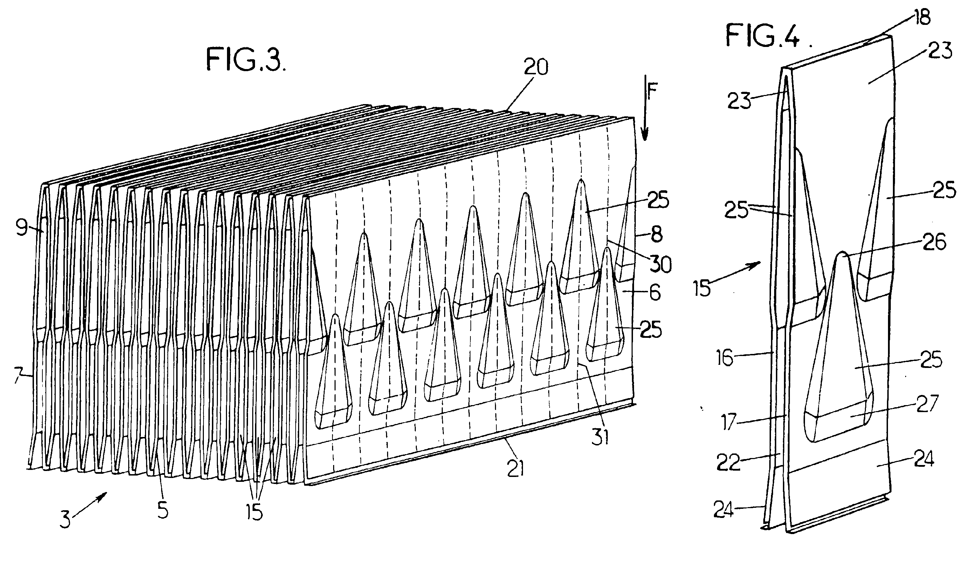

L'élément filtrant 3, également représenté à la figure 3, est constitué par une feuille souple, poreuse, plissée 5 qui s'étend entre deux extrémités longitudinales 6, 7 distantes d'une valeur égale à la longueur de la cartouche 1 et qui possède des bords latéraux 8, 9 distants d'une valeur égale à la largeur de cette cartouche. Les extrémités 6, 7 et les bords latéraux 8, 9 sont immobilisés dans un boîtier rectangulaire 10.

Dans le cas de la cartouche filtrante 2 de la figure 2, l'élément filtrant 4 est également réalisé avec une feuille souple, poreuse, plissée, semblable à la feuille 5 qui est alors enroulée sur elle-même en cylindre de sorte que les extrémités 6 et 7 sont tangentes et que les bords latéraux 8, 9 sont immobilisés entre deux flasques d'extrémité 11, 12. Ces deux flasques sont par exemple réalisés sous la forme de couronnes métalliques annulaires. Un cylindre intérieur étant ainsi délimité (non représenté).

L'élément filtrant 3 est formé d'une succession de plis 15. Chaque pli 15 est en forme de "V" et possède deux rabats 16, 17 qui sont reliés selon une arête 18. L'ensemble des arêtes 18 des plis 15 définissent deux faces analogues de l'élément filtrant 3, une première face 20 et une deuxième face 21 qui sont de forme rectangulaire et qui s'étendent entre les extrémités longitudinales 6, 7 et les faces latérales 8, 9 de la cartouche filtrante 1.

En considérant que le flux à filtrer par l'élément filtrant 3 se déplace selon le sens de la flèche F, perpendiculairement aux faces 20, 21, la première face 20 est appelée la face amont et la deuxième face 21 est appelée la face aval.

Les rabats 16 et 17 de chaque pli 15 définissent l'épaisseur de l'élément filtrant 3 qui correspond à l'écartement entre les faces amont 20 et aval 21 et sont mutuellement écartés pour délimiter une gorge 22. L'ensemble des arêtes 18 des plis 15 appartiennent aux faces 20 et 21 et à chaque arête 18 de l'une des faces correspond une gorge 22 sur l'autre face.

Chaque rabat 16, 17 est de forme sensiblement plane et possède une extrémité amont 23 voisine de l'arête 18 et une extrémité aval 24 opposée à l'extrémité amont. Ces extrémités forment un certain angle avec le reste de la surface des rabats 16, 17 de sorte que les extrémités amont 23 d'un pli 15 sont tournées l'une vers l'autre et les extrémités aval 24 s'écartent l'une de l'autre. Ceci permet en combinaison avec les propriétés mécaniques du papier constituant la feuille 3 de maintenir les plis écartés les uns des autres.

Comme le montre plus particulièrement la figure 4, chaque rabat 16, 17 d'un pli 15 possède un relief ou embossage 25 tourné à l'opposé de la gorge 22, c'est-à-dire en direction du rabat 16, 17 du pli suivant 15.

Le relief 25 est de forme convergente en direction de la face amont 20 de l'élément filtrant 3 et prend par exemple une forme telle, que sa projection sur un plan est voisine de celle d'un triangle isocèle dont la pointe 26 est située en amont de la base 27 par rapport au déplacement du fluide.

La forme et la disposition des reliefs 25 sur chaque rabat 16, 17 des plis 15 sont telles que le flux de fluide est réparti de manière homogène sur toute la surface de chaque rabat. De préférence, les reliefs sont décalés les uns par rapport aux autres. Dans l'exemple représenté aux figures 3 et 4, les reliefs 25 sont répartis en deux rangées, une rangée amont 30 et une rangée aval 31. La rangée amont 30 est située dans la moitié amont de chaque rabat 16, 17 et la rangée aval 31 est située dans la moitié aval des rabats de sorte que les pointes 26 des reliefs 25 de la rangée aval 31 sont situées en amont des bases 27 des reliefs 25 de la rangée amont 30.

Les plis 15 sont identiques les uns aux autres de sorte que les reliefs 25 des rabats 16, 17 de deux plis successifs 15 sont en regard tout en étant mutuellement écartés de manière à laisser un passage de fluide continu entre chaque rabat. En variante, les reliefs 25 en regard des rabats 16, 17 de deux plis successifs 15 sont en contact, ce qui assure l'écartement des plis 15.

Les reliefs 25 occupent au moins 10% de la surface de la moitié amont des rabats 16,17 et la hauteur de ces reliefs est sensiblement égale à deux à trois fois leur base, tandis que la profondeur des reliefs est très faible par rapport à leur base.

Lorsque le flux de fluide traverse l'élément filtrant 3, le flux est dévié par les reliefs 25 de sorte qu'au niveau de chaque rabat 16, 17, la perte de charge est augmentée dans la moitié amont entre deux rabats par rapport à un pli qui ne comporte pas de tels reliefs. Compte tenu que la répartition du débit sur la surface de la feuille souple est homogène, la perte de charge globale de l'élément filtrant étant ainsi quasiment inchangée par rapport à un élément filtrant dépourvu de ces reliefs.

Le flux de fluide est réparti de manière homogène sur toute la surface des rabats, ce qui permet un colmatage uniforme de chaque rabat.

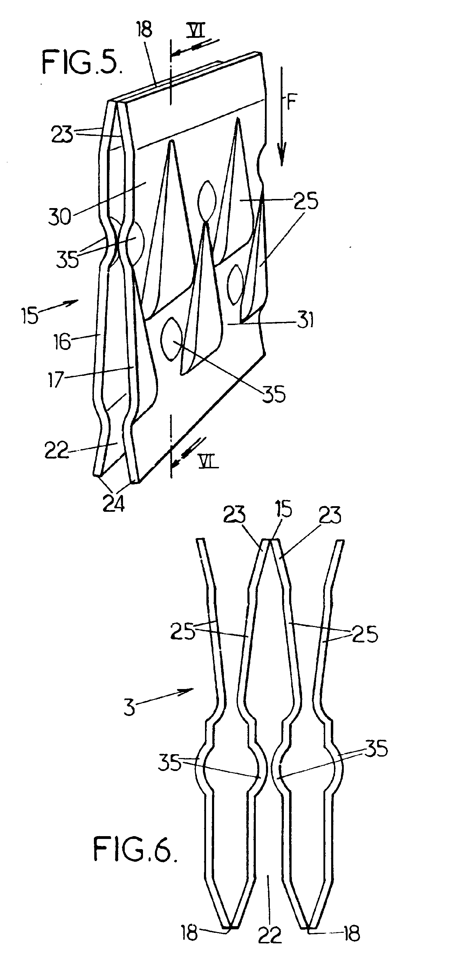

Un deuxième mode de réalisation est représenté aux figures 5 et 6. Les éléments identiques au premier et au deuxième modes de réalisation portent les mêmes références.

Dans ce deuxième mode de réalisation, chaque rabat 16, 17 d'un pli 15 comporte en outre un élément de séparation 35 qui prend la forme d'un bossage dont la projection sur un plan est un disque. Ces éléments de séparation 35 sont intercalés avec les reliefs 25 de sorte que les éléments 35 de la rangée aval 31 sont situés à l'aplomb des reliefs 25 de la rangée amont 30 et les éléments de séparation 35 de la rangée amont sont situés au-dessus des pointes 26 des reliefs 25 de la rangée aval 31. Les éléments de séparation 35 du rabat 17 de chaque pli 15 sont situés en vis-à-vis des éléments de séparation 35 du rabat 16 du même pli et sont tournés les uns vers les autres, à l'opposé des reliefs 25, de manière à être en butée les uns contre les autres et séparer de manière positive les rabats de chaque pli.

Le fonctionnement de ce deuxième mode de réalisation est identique au fonctionnement précédemment décrit en regard du premier mode de réalisation.

## Revendications

1. Elément filtrant constitué par une feuille souple poreuse plissée (5) pour filtrer un fluide dont le flux se déplace selon un sens déterminé (F), l'élément filtrant (3,4) possédant des première (20) et deuxième (21) faces opposées ainsi qu'une succession de plis (15), les première (20) et deuxième (21) faces étant espacées l'une de l'autre par un écartement correspondant à l'épaisseur de l'élément filtrant (3,4) et étant respectivement situées en amont et en aval par rapport au déplacement du flux du fluide, chacun des plis (15) comprenant une arête (18) et deux rabats (16,17) qui définissent ladite épaisseur, les arêtes (18) des plis (15) étant disposées sur la face amont (20) et la face aval (21), **caractérisé en ce qu'**au moins un rabat (16,17) de chaque pli (15) comprend au moins un relief (25) tourné vers le rabat (16,17) du pli suivant (15), le relief (25) étant de forme convergente en direction de la face amont (20) de l'élément filtrant (3,4) et occupant au moins 10% de la surface de la moitié amont du rabat (16,17) de chaque pli (15).

2. Elément filtrant selon la revendication 1, dans lequel chaque rabat (16,17) de chaque pli (15) comprend plusieurs reliefs (25) qui sont décalés les uns par rapport aux autres dans le sens de la largeur et de l'épaisseur de l'élément filtrant (3,4).

3. Elément filtrant selon la revendication 2, dans lequel les reliefs (25) de chaque pli (15) sont disposés selon une première (30) et une deuxième (31) rangées, la première rangée (30) étant placée en amont de la deuxième rangée (31) par rapport au sens de déplacement du fluide.

4. Elément filtrant selon la revendication 3, dans lequel la projection des reliefs (25) sur un plan est de forme voisine d'un triangle isocèle dont la pointe (26) est située en amont de la base (27) par rapport au sens de déplacement du fluide.

5. Elément filtrant selon la revendication 4, dans lequel les pointes (26) des reliefs (25) de la deuxième rangée (31) sont situés en amont des bases (27) des reliefs (25) de la première rangée (30) par rapport au sens de déplacement du fluide.

6. Elément filtrant selon l'une quelconque des revendications 3 à 5, dans lequel les plis (15) sont identiques et les reliefs (25) en regard de deux plis successifs (15) sont mutuellement écartés.

7. Elément filtrant selon l'une quelconque des revendications 3 à 5, dans lequel les plis (15) sont identiques et les reliefs (25) en regard de deux plis successifs (15) sont en contact.

8. Elément filtrant selon l'une quelconque des revendications précédentes, dans lequel chaque rabat (16,17) comporte au moins un élément de séparation (35) qui maintient écartés les rabats (16,17) d'un même pli (15) et qui est tourné à l'opposé dudit au moins un relief (25).

9. Elément filtrant selon la revendication 8, dans lequel ledit au moins un élément de séparation (35) est aligné avec ledit au moins un relief (25) du même pli (15) selon l'épaisseur de l'élément filtrant (3,4).

10. Elément filtrant selon l'une quelconque des revendications 1 à 9, dans lequel l'élément filtrant (4) est cylindrique présentant une surface externe et une surface interne, l'une étant constituée par la face amont (20) et l'autre par la face aval (21), les arêtes (18) étant orientées axialement.

11. Elément filtrant selon l'une quelconque des revendications 1 à 9, dans lequel l'élément filtrant (3) est un panneau plat de forme rectangulaire.

## Claims

1. Filter element consisting of a pleated porous supple sheet (5) for filtering a liquid which flows in a determined direction (F), the filter element (3, 4) having opposing first (20) and second (21) faces and a series of folds (15), the first (20) and second (21) faces being spaced from each other by a distance corresponding to the thickness of the filter element (3, 4) and being positioned respectively upstream and downstream relative to the flow of the liquid, each of the folds (15) comprising a ridge (18) and two flaps (16, 17) which define said thickness, the ridges (18) of the folds (15) being disposed on the upstream face (20) and the downstream face (21), **characterised in that** at least one flap (16, 17) of each fold (15) comprises at least one relief (25) facing the flap (16, 17) of the following fold (15), the relief (25) converging in the direction of the upstream face (20) of the filter element (3, 4) and occupying at least 10 % of the surface area of the upstream half of the flap (16, 17) of each fold (15).

2. Filter element according to claim 1, wherein each flap (16, 17) of each fold (15) comprises a plurality of reliefs (25) which are offset relative to one another along the width and the thickness of the filter element (3, 4).

3. Filter element according to claim 2, wherein the reliefs (25) of each fold (15) are arranged in a first (30) and a second (31) row, the first row (30) being positioned upstream of the second row (31) relative to the flow direction of the liquid.

4. Filter element according to claim 3, wherein the projection of the reliefs (25) along a plane is similar in shape to an isosceles triangle, the tip (26) of which is positioned upstream of the base (27) relative to the flow direction of the liquid.

5. Filter element according to claim 4, wherein the tips (26) of the reliefs (25) of the second row (31) are positioned upstream of the bases (27) of the reliefs (25) of the first row (30) relative to the flow direction of the liquid.

6. Filter element according to any one of claims 3 to 5, wherein the folds (15) are identical and the opposing reliefs (25) of two successive folds (15) are mutually spaced.

7. Filter element according to any one of claims 3 to 5, wherein the folds (15) are identical and the opposing reliefs (25) of two successive folds (15) meet.

8. Filter element according to any one of the preceding claims, wherein each flap (16, 17) comprises at least one separation element (35) which keeps the flaps (16, 17) of a single fold (15) apart and is turned away from said at least one relief (25).

9. Filter element according to claim 8, wherein said at least one separation element (35) is aligned with said at least one relief (25) of the same fold (15) according to the thickness of the filter element (3, 4).

10. Filter element according to any one of claims 1 to 9, wherein the filter element (4) is cylindrical having an external surface and an internal surface, one formed by the upstream face (20) and the other by the downstream face (21), the ridges (18) being axially oriented.

11. Filter element according to any one of claims 1 to 9, wherein the filter element (3) is a flat rectangular panel.

## Patentansprüche

1. Filterelement, das durch eine flexible poröse gefaltete Bahn (5) gebildet ist, zum Filtern eines Fluids, dessen Strom in einem bestimmten Strömungssinn (F) fließt, wobei das Filterelement (3, 4) erste und zweite einander gegenüber liegende Seiten (20, 21) sowie eine Abfolge von Faltungen (15) aufweist, und die erste Seite (20) und die zweite Seite (21) voneinander um einen Zwischenraum beabstandet sind, der der Dicke des Filterelements (3, 4) entspricht, und bezüglich der Richtung des Stroms des Fluids jeweils auf der Zuströmseite bzw. auf der Abströmseite liegen, wobei jede der Faltungen (15) eine Faltkante (18) und zwei Umschläge (16, 17) umfasst, welche die besagte Dicke definieren, und die Faltkanten (18) der Faltungen (15) auf der Zuströmseite (20) und auf der Abströmseite (21) liegen, **dadurch gekennzeichnet, dass** mindestens ein Umschlag (16, 17) jeder Faltung (15) mindestens eine dem Umschlag (16, 17) der darauf folgenden Faltung (15) zugewandte Erhebung (25) aufweist, welche Erhebung (25) eine sich in Richtung auf die Zuströmseite (20) des Filterelements (3, 4) zu verjüngende Form hat und mindestens 10 % der Fläche der stromauf gelegenen Hälfte des Umschlags (16, 17) jeder Faltung einnimmt.

2. Filterelement nach Anspruch 1, bei dem jeder Umschlag (16, 17) jeder Faltung (15) mehrere Erhebungen (25) umfasst, die in Breite und Dicke des Filterelements (3, 4) gegeneinander versetzt angeordnet sind.

3. Filterelement nach Anspruch 2, bei dem die Erhebungen (25) jeder Faltung (15) entlang einer ersten Reihe (30) und einer zweiten Reihe (31) angeordnet sind, wobei die erste Reihe (30) bezüglich der Strömungsrichtung des Fluids stromauf der zweiten Reihe (31) liegt.

4. Filterelement nach Anspruch 3, bei dem die Projektion der Erhebungen (25) auf eine Ebene eine einem gleichschenkligen Dreieck ähnelnde Form hat, dessen Spitze (26) bezüglich der Strömungsrichtung des Fluids stromauf der Basisseite (27) liegt.

5. Filterelement nach Anspruch 4, bei dem die Spitzen (26) der Erhebungen (25) der zweiten Reihe (31) bezüglich der Strömungsrichtung des Fluids stromauf der Basisseiten (27) der Erhebungen (25) der ersten Reihe liegen.

6. Filterelement nach einem der Ansprüche 3 bis 5, bei dem die Faltungen (15) identisch sind und die Erhebungen (25) bei zwei aufeinander folgenden Faltungen (15) gegeneinander versetzt sind.

7. Filterelement nach einem der Ansprüche 3 bis 5, bei dem die Faltungen (15) identisch sind und die Erhebungen (25) bei zwei aufeinander folgenden Faltungen (15) miteinander in Kontakt stehen.

8. Filterelement nach einem der vorstehenden Ansprüche, bei dem jeder Umschlag (16, 17) mindestens ein Abstandelement (35) umfasst, das die Umschläge (16, 17) ein und derselben Faltung (15) auseinander hält und das gegensinnig zu der mindestens einen Erhebung (25) orientiert ist.

9. Filterelement nach Anspruch 8, bei dem das besagte mindestens eine Abstandelement (35) mit der mindestens einen Erhebung (25) derselben Faltung (15) entsprechend der Dicke des Filterelements (3, 4) ausgefluchtet ist.

10. Filterelement nach einem der Ansprüche 1 bis 9, bei dem das Filterelement (4) zylindrisch ist und einer Außenfläche und eine Innenfläche aufweist, deren eine von der Zuströmseite (20) gebildet ist und deren andere von der Abströmseite (21), wobei die Faltkanten (18) axial ausgerichtet sind.

11. Filterelement nach einem der Ansprüche 1 bis 9, bei dem das Filterelement (3) eine flache Platte in Rechteckform ist.
